# EUROPEAN PATENT APPLICATION

(11) **EP 4 703 869 A1**
(43) Date of publication of application: **04.03.2026**
(21) Application number: 24197259.5
(22) Date of filing: 29.08.2024
(51) Int. Cl.: G06F 8/34, G06F 8/35, G06F 8/30, G06F 8/38

(54) **TASK-BASED USER EXPERIENCE DESCRIPTION LANGUAGE FOR AI SCOPING AND CONFIGURATION**

(71) Applicant: Siemens Aktiengesellschaft, 80333 München (DE)
(72) Inventor: Wasgint, Rainer, 81739 München (DE)
(74) Representative: Siemens Patent Attorneys

(57) **Abstract**

According to the present invention it is provided a method of generating an application (10) for a technical domain, including the steps of
- providing general condition information (9, 11, 12) for the application,
- providing user specification information (7) related to the application (10) by a user interface,
- generating a data stream (13) in a description language from the general condition information (9, 11, 12) and the user specification (7) information,
- adding additional information in the description language to the data stream (13) by a first artificial intelligence unit (T1 to T9; 16 to 19; 21), thereby obtaining a supplemented data stream,
- generating the application by a second artificial intelligence unit on the basis of the supplemented data stream.

## Description

The present invention relates to a method of generating an application for a technical domain. Furthermore, the present invention relates to a corresponding device.

*Independent of the grammatical term usage, individuals with male, female or other gender identities are included within the term.*

The results of generative artificial intelligence (Al) queries, especially in the UX field (user experience) for creating an application through prompts, are not meaningful without a concrete description of the domain, context, vision, and specifically the user's task(s) for the AI based on natural language.

Artificial intelligence (Al) shows significant trends and developments as stated below:

Generative AI Impact and Adoption: Generative AI has seen explosive growth, particularly impacting marketing, sales, product, service development, and service operations. Expectations are high for its disruptive impact, especially in industries heavy on knowledge work like technology, financial services, pharmaceuticals, and education. However, there is a noted lack of preparedness for potential risks associated with generative Al, such as inaccuracy, cybersecurity, and regulatory compliance.

Technology Trends and Investments: So far, generative Al, added significantly to the economic value with potential applications across industries. Investment trends showed a shift, with some areas like trust architectures and digital identity seeing growth, while others like applied Al and cloud computing saw a decline due to their restricted maturing nature. Despite these fluctuations, overall tech investment remained strong, indicating a sustained belief in the potential of these trends.

Al Research, Ethics, and Workforce Trends: Large language models (LLMs) have continued to grow in size and cost, indicating a trend towards more powerful Al systems. However, this comes with increased environmental costs and a call for new benchmarks due to Al's growing capabilities. Ethical considerations are becoming increasingly important, as evidenced by the rise in Al controversies and the growing body of ethics-related research. Generally, the demand for AI skills has increased across sectors, since there is a notable shortage of qualified professionals in specific high-tech fields.

These developments highlight the dynamic nature of the tech landscape, with significant advancements, challenges, and opportunities for innovation and ethical consideration.

The closest prior state of art to the concept of Al-driven user experience (UX) design and task model-driven UX development, encompasses business machine learning optimization (BizML), AI tools for specific UX tasks, and predictive analytics in business environments.

BizML (Business Machine Learning Optimizer): This is a platform designed to enhance business profitability by leveraging AI for forecasting and optimization, particularly in finance and marketing. BizML differentiates from traditional AutoML solutions by incorporating human expertise directly into the AI model building process. It focuses on capturing domain-specific knowledge from financial and marketing experts to improve prediction accuracy and reduce recommendation error rates.

AI Tools for UX Design: These are evaluated based on functionality, integration with workflows, Al-specific capabilities, cost, and support among other criteria. The state of art includes platforms and tools that utilize AI to enhance certain phases in the UX design process, aiming to streamline user research, design or user testing, up to operations, improve collaboration, and enhance the design quality through Al-driven insights and automation.

Predictive Analytics in Business: The application of predictive analytics in business, particularly within the domains of stock price prediction, financial forecasting, and marketing optimization. This involves using machine learning models and data analysis techniques to forecast future trends and make more informed business decisions.

Emerging UX Trends: This includes Al-driven personalization, advanced data visualization, voice and NLP interfaces, predictive UX, and proactive interactions in B2B platforms. These trends showcase how businesses are incorporating AI to create more personalized, intuitive, and efficient user experiences.

McKinsey Technology Trends Outlook 2023: It highlights the latest trends in technology, including AI and machine learning, and their impact on business strategies and operations.

While it broadly covers technology trends, it offers context for how AI and ML are reshaping industries, which only indirectly influences UX design and business strategies.

The object of the present invention is to generate an application for a technical domain more comfortably.

According to the present invention this object is solved by a method and a device as set out in the independent claims. Further favorable developments are defined in the sub-claims.

Thus, there is provided a method of generating an application for a technical domain. The method may be implemented on a computer. The application may be based on a computer program designed to perform a specific task or a set of tasks for users, e.g. a sequence of user interactions. The technical domain refers to a specialized field of knowledge that requires specific technical skills, expertise and understanding. It often involves complex concepts, tools and methodologies unique to that particular area. Examples include software development, mechanical engineering, data science and healthcare.

The method includes a step of providing general condition information for the application. The general condition information may include context information such as the domain, the goal of the application a given vision and user tasks. Specifically, the general condition information may include KPls (key performance indicator) to measure the success and effectiveness of user experience (UX designs) and strategies. The selection of the relevant KPIs depends on the specific goals and requirements. Furthermore, the condition information may include design systems and interaction patterns, when users interact with digital products. The general condition information may also relate to the ethical and moral framework for the use of the application. The general condition information may also include expert knowledge and rule sets as well as prompts for the creation of the application.

A further step of the inventive method includes providing user specification information related to the application by a user interface. In other words, the method is based on user input. A user interface is provided in order to receive information from the user. For instance, the user can define the facts that are important to him, like the design et cetera.

In a further step of the method, a data stream is generated in a description language from the general condition information and the user specification information. The description language can be based on natural language. Thus, the data stream may comprise the general condition information and the user specification information described with natural language.

In a further step of the method, additional information in the description language is added to the data stream by a first artificial intelligence unit (Al unit), thereby obtaining a supplemented data stream. Thus, e.g. the context information and the user input in the data stream may be completed with information from an artificial intelligence unit. This means that the user and the artificial intelligence unit can use a common syntax. The first artificial intelligence unit may comprise one or more tools which generate the additional information. Additionally or alternatively the artificial intelligence unit may comprise a generative model like a large language model (LLM). The artificially generated additional information is added to the data stream, which results in a supplemented data stream.

In a final step the application is generated by a second artificial intelligence unit on the basis of the supplemented data stream. Optionally, the first artificial intelligence unit and the second artificial intelligence unit are a common unit. Each or both of them may include a LLM.

Advantageously, the application is generated on the basis of the general condition information and the user specification information as well as additional information from an artificial intelligence unit. Thus, the AI unit helps to generate the application more comfortably.

In one embodiment, the additional information relates to a goal of the application, a design of the application, a user type of the application and/or a task of the application. Thus, any data missing for generating a useful application can be added by an AI unit.

According to a further embodiment, the application is designed to fulfill a task in the technical domain. For instance, such task may be the commissioning of a building automation system. Moreover, the task may also relate to the maintenance of technical objects like wind turbines, cars or production systems.

According to another embodiment, the generated application is fed back to be used as part of the general condition information or part of the user specification information for generating a further version of the application. In other words, the output of the second artificial intelligence unit, namely the generated application, is fed back to the input side in order to use the output information for generating an improved application. For feedback, it is advantageous if the input and output use the same syntax.

According to a further development, one or more parts of the generated application are kept, modified or deleted by a user as the user specification information for generating the further version of the application. This means that the user specification information (user input) allows the freedom to adapt a previous version of the application in whole or in part or even to remove the previous version from the input side.

According to a further development a code for generating the application has the same syntax as the user specification information. This means that there is no syntax break between input side and output side when generating the application.

In a further embodiment the first artificial intelligence unit includes a plurality of independent tools, each generating a part of the additional information. Known tools may be used as a certain kind of artificial intelligence. For instance, a tool for building a maze or for creating an interview study can be used to provide additional information for the data stream. Thus, the artificial intelligence unit can be composed of several available tools. Each of the tools may provide input for the data stream.

According to another embodiment the first artificial intelligence unit includes a first artificial intelligence subunit for providing expert knowledge and/or a second artificial intelligence subunit for the providing of the user specification information. The artificial intelligence subunit may include a neural network, a vector machine or the like. This artificial intelligence subunit may assist the user when inputting data to the data stream.

In a further embodiment the first artificial intelligence unit includes a second artificial intelligence subunit for generating code as the additional information in the description language and for the adding of the generated code into the data stream. The second artificial intelligence subunit may also include a neural network, a vector machine or the like. It is designed to generate code from the user input. For instance, the user input or any other context or condition information has to be translated into specific code for the data stream.

According to a further embodiment, the first artificial intelligence unit includes a third artificial intelligence subunit for generating instrumentalisation data for an input unit of the application as the additional information in the description language and for the adding of the instrumentalisation data into the data stream. For example, a specific feed of an application has to be instrumentalized, such that pressing of the field can be recognized. Thus, the third artificial intelligence unit can assist the user when instrumentalising parts of the application.

In another embodiment, the first artificial intelligence unit includes a fourth artificial intelligence subunit for generating evaluation data for an evaluation function and/or improvement data for an improvement function as the additional information in the description language and for the adding of the evaluation or improvement data, respectively, into the data stream. Again, the fourth artificial intelligence subunit can comprise a neural network, a vector machine or the like. The subunits may also comprise LLMs or the like. The fourth artificial intelligence subunit can be used for adding evaluation data and/or improvement data into the data stream. For instance, specific parts of the application shall be evaluated or improved. For this purpose, the fourth artificial intelligence subunit may provide respective data for the data stream.

According to a further embodiment, the respective artificial intelligence units are controlled by one single artificial intelligence unit. This means that there is one single Al-unit for handling the input into the data stream and for managing the generation of the complete data stream.

According to a further embodiment, the first and second artificial intelligence unit each comprise a large language model. Thus, both the first artificial intelligence unit for providing the data stream and the second artificial intelligence unit for generating the application are each designed as generative models. Specifically, if the first and second artificial intelligence units are united into one single unit, one large language model may be applied for performing all necessary functions when generating the application.

Furthermore, there may be provided a method of generating a task structure for a user by using an application generated by a method as described above. Such task structure may be helpful for carrying out complex tasks. Such complex tasks may arise during maintenance of industrial systems or cars or when customizing building automation systems.

Moreover, the may be provided a method of performing a process (maintenance of an object, or producing the object) by executing individual process steps as defined in an application generated by a method as described above. The process may relate to maintaining an object, producing the object, customizing a system etc.

The above described object is also solved by a device for generating an application for a technical domain, including
- storing means for providing general condition information for the application,
- a user interface for providing user specification information related to the application by,
- calculating means designed for
   * generating a data stream in a description language from the general condition information and the user specification information,
   * adding additional information in the description language to the data stream by a first artificial intelligence unit, thereby obtaining a supplemented data stream, and

   - generating the application by a second artificial intelligence unit on the basis of the supplemented data stream.

The storing means may comprise one or more memory modules and may be realized as internal memory or as cache for external data. The user interface is the point of interaction between a user and a computer system. It encompasses all the elements users see and interact with like buttons, menus and text fields to perform tasks and access information.

The calculating means may comprise one or more processors as well as one or more memory modules.

The variations and advantages described above in connection with the inventive method also apply to the inventive device. Respective method features can be regarded as functional features of the device.

There may be provided a computer program comprising instructions which, when the program is executed by a device described above, cause the device to carry out any method defined above.

Furthermore, there may be provided a computer-readable medium comprising instructions which, when the program is executed by a device described above, cause the device to carry out any method defined above.

The present invention will now be described in more detail in connection with the attached drawings showing in:
- FIG 1: a flow chart of an embodiment of the present invention;
- FIG 2: a flow chart of another embodiment of the present invention and
- FIG 3: a flow chart of a still further embodiment of the present invention.

The following embodiments represent preferred examples of the present invention.

The results of generative artificial intelligence (Al) queries, especially in the UX field for creating an application through prompts, are not meaningful without a concrete description of the domain, context, vision, and specifically the user's task(s) for the AI based on natural language. Therefore, a Task-based User Experience Description Language TUXDL may be provided.

TUXDL defines all essential influencing factors for a targeted Al-supported generation of UX-based applications. It is based on the proven, task-oriented approach and relates it to other important context information such as the domain, the goal of the application, a given vision, and the user tasks, and converts them into a common syntax so that the results can be generated in a meaningful, beneficial, and targeted manner for the application with the best possible initial and consecutive user experience for the user. This is especially important as such AI generation processes can be automated and happen in the loop with the user (User in Control - AI in the Loop).

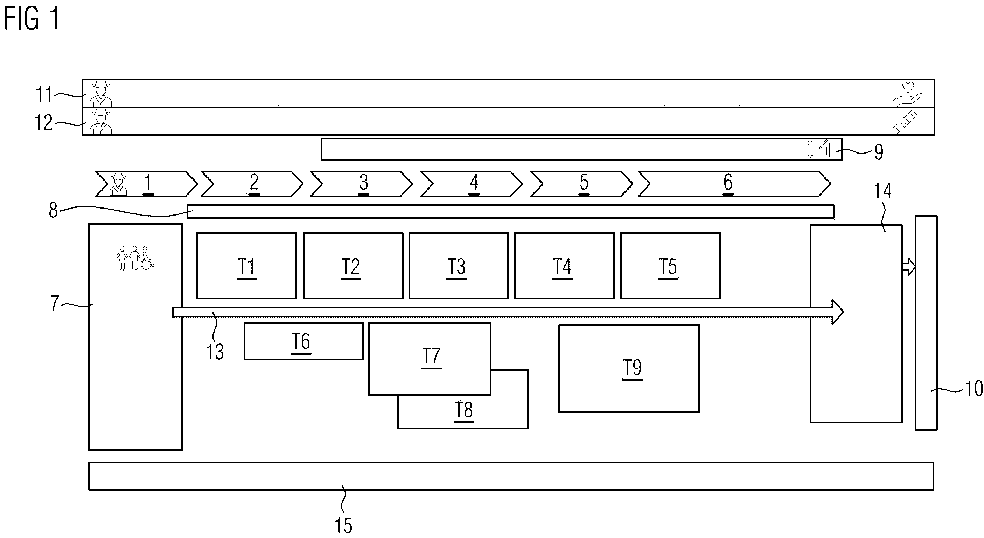

The individual UX task-specific tools are brought into a network by a common framework and the TUXDL and can thus be configured and used in a task-oriented manner via the TUXDL description in an orchestrated manner for a common purpose. FIG 1 shows the simplified process 1 in which the individual artifacts for UX are created separately from each other as punctual areas of UX in the process flow (also Al-generated, but not orchestrated) in the chronological sequence (abstracted from iterations and agile approaches).

The process of automated creation of an application in the UX-field can be divided e.g. in six steps 1 to 6. However, the number of steps may be different. Further steps may be inserted or some of the steps may be combined. Some of the steps may be optional.

In a first step 1 an expert (preferably in the technical domain of interest) can provide user experience (UX) knowledge.

In a second step 2 a user research may be performed. Specifically, data about personas or questionnaires may be provided. Furthermore, heat maps, observations and notes may result from such user research. An automatic analyses and a clustering may be performed on the data.

In a third step 3 of the process a user experience analyses may be performed. Tracking and clustering of the analyses data can be made. Transcription of interviews can take place in both steps 2 and 3. Topics of enjoyment and for improvement can be found on the basis of the UX analyses data.

In step 4 an interaction design can be created. Specific icons and logos can be used. The design can be based on concepts, sketches and wire frames. Epics and user stories can be regarded.

In step 5 the application is generated. A first artificial intelligence unit can be used for such generation. A UX prototype or a UX architecture may be the result of the generation step 5.

In an optional step 6 instrumentation and evaluation may be performed. The instrumentation may be automatic and preferably Al-based. For evaluation user tests may be executed. A "SUUS" (System Understanding User Statement) can be used in an Al-system for comprehending what a user has said. A rating of the generated application referring to "how well the Al-system realizes the user's wishes" may be performed based on various factors like accuracy, relevance and completeness.

Additionally, TUXDL may create a common framework for input and output as well as processing via an AI in a data-driven framework to increase efficiency and timing between the individual creation steps.

In order to individualize the application user input 7 shall be utilized. For instance, the user may input architecture information concerning forms and fields as well as Ids, events and statistics. Moreover, logs and forums can be used as additional data sources.

An AI based support 8 may be provided all over the steps 2 to 6. Particularly, the support can be realized for execution and automatic generation of UX activities and artifacts.

Mapping 9 of information based on interaction design patterns and the design system can be performed in steps 3 to 6. Furthermore, a framework can be defined for the creation of the application 10. This framework can include UX observations 11 and UX criteria 12. The UX observations may include rules related to ethics and moral. Furthermore, the UX criteria 12 may include KPIs and metrics.

Based on the user input 7 a data stream 13 preferably in the description language TUXDL is generated.

The data stream 13 can be supplemented or completed by individual tools, e.g. tools T1 to T9. Each tool may add information to the data stream 13 during one or more of the steps 1 to 6. The added information is provided in the syntax of the data stream 13. Preferably, each of the tools uses the same description language as the user for the user input 7.

The tools T1 to T9 can be regarded as a first artificial intelligence unit. The number of tools can vary. At least one tool is used in this embodiment to complete the data stream 13. The completed data stream 13 is input into an optional feedback unit 14. This feedback unit 14 may realize an automatic feedback to the input sight, e.g. to the user input 7. Thus, the data stream 13 can be optimized in a loop. The data stream 13 (optionally optimized in the loop) can be input into a second artificial intelligence unit (not shown in FIG 1) in order to generate the application 10.

A trace and track unit 15 may be used to find out what elements of the application are being used and what elements are not used. This information is also helpful for optimizing the data stream 13 and finally the application 10.

In this way, an Al-automated and orchestrated feedback loop can be created between data input and output of the application to be generated, configured by UX KPIs and metrics, in conjunction with a design system and monitored by a UX expert, allowing the user to keep, modify or delete parts of the generate. The necessary changes can then be transported automatically via the manipulation of the TUXDL as effects on individual areas of the chain. The generated results at the end of the chain are Al-based instrumented at code level so that they refer to corresponding entire screens, field IDs or message definitions and can flow back into the data-driven approach via tracing and tracking of user information at the beginning of the data-driven loop.

In this way, the TUXDL creates an orchestrated process that can run automatically, but (optionally) monitored by a UX expert, as a "user-in-the-A! loop".

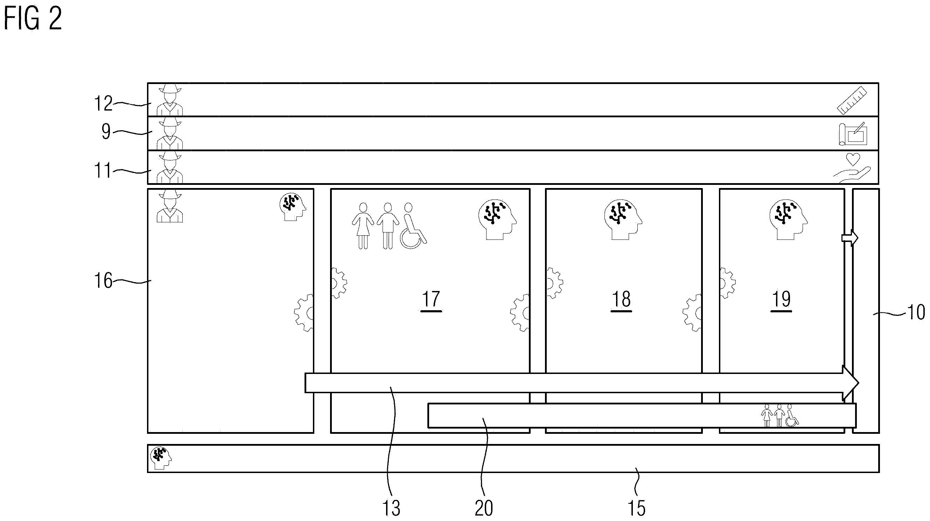

FIG 2 shows another embodiment of a data driven AI for a UX framework. The figure represents a flow chart of an embodiment of the method according to the present invention. The elements with reference signs 9 to 13 and 15 are already explained in connection with FIG 1. It is refered to the above description. In this embodiment the tools are "half" integrated into generative AI subunits 16 to 19. The first generative AI unit (i.e. the first artificial intelligence subunit) 16 may realize the domain description and the provision of a knowledge base. It may define metrics and KPIs. Furthermore it may establish a ruleset and promts for creation. The first generative AI unit may provide the basic structure of the data stream 13 preferably in TUXDL.

A sequence of further generative AI units 17 to 19 may add aditional information to the data stream 13. For example the second generative AI unit (i.e. the second artificial intelligence subunit) 17 may assist the user to provide a user input. A third generative AI unit (i.e. the third artificial intelligence subunit) 18 may be responsible for code generation and instrumentation. It may add respective information to the data stream 13.

Optionally, there may be provided a fourth generative AI unit (i.e. the fourth artificial intelligence subunit) 19 for adding evaluation and improvement data to data stream 13. Finally, application 10 is generated on the basis of the completed data stream 13.

Even not shown in FIG 2 a feedback unit 14 may be provided in order to optimize the data stream 13. Furthermore, a user selection unit 20 may be provided in order to keep or delete parts of the data stream 13 or the application 10 created by the generative AI units 17 to 19.

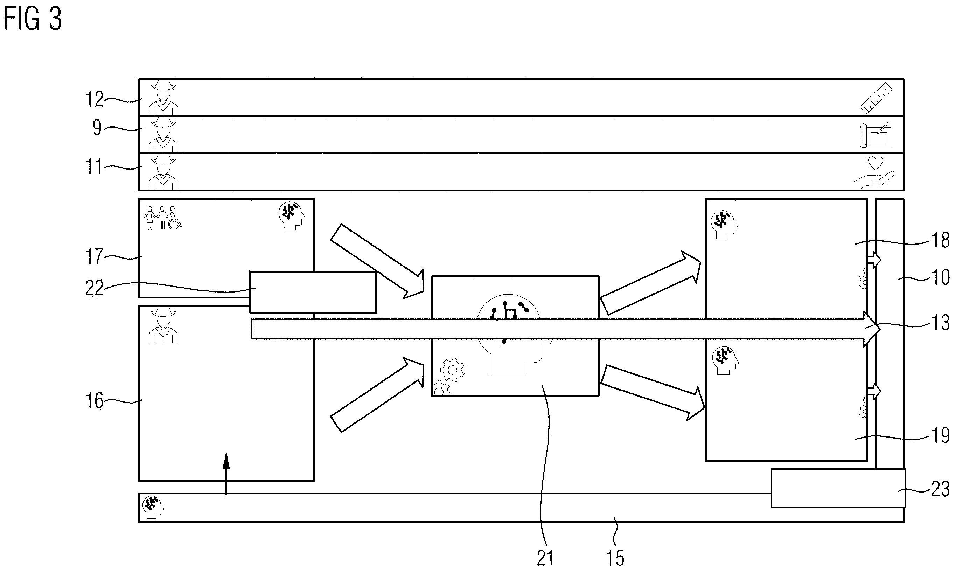

FIG 3 shows a fully integrated version of a data driven AI for a UX framework. Essentially, the elements 9 to 19 correspond to the respective elements of FIG 2. However, a central artificial intelligence unit 21 coordinates the artificial intelligence subunits 16 to 19. Specifically, the inputs of units 16 and 17 can be used for controlling the units 18 and 19. Optionally an expert or user can perform a selection 22 from users "existing knowledge" of the user input 17. According to a further option a further selection 23 can be made by the user from the user's generated results.

The known AutoML (Automated Machine Learning) focuses on delivering LLMs, a technology that enables the automatic creation, training, and optimization of machine learning models. The process aims to reduce the need for extensive manual programming and expertise in the field of machine learning, allowing even users without in-depth ML knowledge to develop and deploy models. However, the steps are hardly usable without AI expertise for a domain user, as TUXDL (Task-based User Experience Description Language) focuses on, without AI knowledge.

Furthermore, the known BizML (Business Machine Learning Optimizer), on the other hand, is workflow-centered and is a combination of data, software, and professional/integrative services optimized to help companies significantly improve their profitability by utilizing AI for predictions and optimizations. It typically aims to optimize finance and marketing functions.

However, the here introduced TUXDL is focused on the holistic description of user's tasks in the domain context and the result of AI generation in terms of user experience and user tasks.

Examples of concrete TUXDL syntax:
TUXDL Hierarchy and Syntax
Domain == Description of domain
Design System == Design system reference
Style == Description of Styleguide(s) to use in certain [Aspects] of UI
Scope == Boundary definition of the product
Vision == Visionary description of the creative value of the product
Goal == Customer Value to be generated by the product, which can be refined in the Constraints section
   Phase == High Level View == Feature (Bundel) Level? One or more of existing phases needed in the state of the product
   Task (HTL) == High Task Case Level == (User based) Task Cases to be fulfilled by the product
   Action == Sub-Task (STL) / Function Level = (One or more) Detailing Levels (User based) Task Cases to be fulfilled by the product
   Execution == Sub-Task Detail (STDL) = One or more) Execution related detailing Levels (Domain Experts based)

### Task Cases to be fulfilled by the product

Constraints / Expectations / Results == Quality Level - Qualities Section to be specified by a domain expert like:

Pragmatic Qualities: how well the product enables the user to achieve their goals and how effectively it serves its intended purpose. Efficiency, effectiveness, and utility. Practical and logical aspects of the product that make it useful.
Hedonic Qualities: relates to the user's personal satisfaction, pleasure, and emotional experience while using the product. Aesthetics, fun, excitement, and the ability to fulfill the user's needs for self-expression and personal identity.

Address the experiential and emotional aspects of the product that make it enjoyable or fulfilling on a personal level.

### Architecture & Deployment options

```
 # of users
 TUXML: {
       Domain: {
               Industry: "[IndustryType]",
               Audience: "[TargetAudience]",
               Challenges: ["[Challenge1]", "[Challenge2]", "[Challenge3]"],
               Objectives: ["[Objective1]", "[Objective2]", "[Objectives]"]
               },
       DesignSystem: {
               Name: "[DesignSystemName]",
               Principles: ["[Principle1]", "[Principle2]", "[Principle3]"],
               Components: ["[Component1]", "[Component2]", "[Component3]"],
               Patterns: ["[Pattern1]", "[Pattern2]", "[Pattern3]"]
               },
       Style: {
               Colors: ["[Color1]", "[Color2]", "[Color3]"],
               Typography: ["[Font1]", "[Font2]", "[Font3]"],
               Spacing: ["[SpacingSize1]", "[SpacingSize2]", "[SpacingSize3]"],
               Icons: ["[lcon1]", "[Icon2]", "[Icon3]"]
               },
       Scope: {
               Functionalities: ["[Functionality1]", "[Functionality2]", "[Functionality3]"],
               UseCases: ["[UseCase1]", "[UseCase2]", "[UseCase3]"],
               Limitations: ["[Limitation1]", "[Limitation2]", "[Limitation3]"]
               },
       Vision: {
               Impact: "[LongTermlmpact]",
               Innovation: "[InnovativeAspect]",
               Transformation: "[TransformationGoal]", UserExperience:
               "[EnhancementDescription]"
               }
       }
```

- Each main section (Domain, DesignSystem, Style, Scope, Vision) is further subdivided into subordinate components that enable detailed and tokenizable descriptions.
- In the domain, you can specify the industry, target groups, challenges and goals.
- In the DesignSystem, the name of the system, basic principles, components used and patterns can be described.
- In the Style section, color schemes, typography, spacing and icons are listed in detail.
- Scope defines the core functionalities, the use cases and the limits of the product.
- Vision describes the long-term impact, innovative aspects, the intended transformations and how the user experience will be improved.

### Goal Description:

```
 Goal: {
       Value: [SpecificCustomerValue],
       Constraints: [SpecificConstraints]
       }
 
```

### PhaseDescription:

```
Phase: {
       Level: [HighLevelView],
       Features: [[Feature1], [Feature2], ...],
       StateNeeds: [CurrentStateRequirements]
       }
```

### TaskDescription:

```
 Task: {
       Identifier: [TaskID],
       Description: [UserBasedTaskDescription],
       Objectives: [[Objective1], [Objective2], ...],
       UserRoles: [[UserRole1], [UserRole2], ...]
       }
```

### Action Description:

```
 Action: {
       Identifier: [ActionlD],
       TasklD: [RelatedTaskID],
       Details: [DetailedActionDescription],
       Userlnteractions: [[User!nteraction1], [Userlnteraction2], ...], Preconditions:
       [Action Preconditions],
       ExpectedOutcome: [ActionResult]
       }
```

### Execution Description:

```
 Execution: {
       Identifier: [ExecutionlD],
       ActionlD: [RelatedActionlD],
       ExpertiseArea: [DomainExpertiseArea],
       Steps: [[Step1], [Step2], ...],
       Tools: [[Tool1], [Tool2], ...],
       VerificationCriteria: [ExecutionVerification]
       }
```

- [SpecificCustomerValue] represents the specific customer benefit that the product is intended to generate.
- [SpecificConstraints] describes restrictions that must be observed when achieving this value.
- [HighLevelView], [Feature1], [Feature2], ... define the higher views and the specific features required in the current product phase.
- [TaskID], [UserBasedTaskDescription], ... identify and describe user-based tasks.
- [ActionlD], [DetailedActionDescription], ... specify the actions or subtasks that must be performed in order to fulfill the tasks.
- [ExecutionlD], [DomainExpertiseArea], ... detail the execution aspects that are domain expert specific and required to fulfill the tasks.

### Qualities:

```
 { Constraints:
               {
               DomainSpecificConstraints: [ListSpecificConstraints],
               UserSpecificConstraints: [ListUserConstraints],
               TechnicalConstraints: [ListTechnicalConstraints] },
       Expectations: {
               DomainExpectations: [ListDomainExpectations],
               UserExpectations: [ListUserExpectations],
               PerformanceExpectations: [ListPerformanceExpectations] },
       Results: {
               AchievedResults: [ListAchievedResults],
               UserFeedback: [ListUserFeedback],
               PerformanceMetrics: [ListPerformanceMetrics] },
       QualityLevels: {
               PragmaticQualities: {
                      Efficiency: [RateEfficiency],
                      Effectiveness: [RateEffectiveness],
                      Utility: [RateUtility],
                      Description: [TextualDescriptionOfPragmaticQualities]},
               HedonicQualities: {
                      Satisfaction: [RateSatisfaction],
                      Pleasure: [RatePleasure],
                      Emotional Experience: [RateEmotionalExperience],
                      Aesthetics: [RateAesthetics],
                      Fun: [RateFun],
                      Excitement: [RateExcitement],
                      SelfExpression: [RateSelfExpression],
                      Personal Identity: [RatePersonalldentity],
                      Description: [TextualDescriptionOfHedonicQualities]
                      }
               }
               }
```

• 'Constraints' describe the limitations associated with the invention and may include specific, user-related and technical limitations.
• 'Expectations' define the expected goals and results from different perspectives.
• Results' document the actual results achieved, user feedback and performance metrics.
• 'QualityLevels' divided into 'PragmaticQualities' and 'HedonicQualities' describe how well the product fulfills the user's practical and emotional needs. Each area is divided into measurable sub-categories and can contain textual descriptions as well as numerical ratings.

Task Model: User - Intention Syntax
1. Task Case Identifier
   - Format: TaskCase: [UniqueName]
   - Description: Begins the task case definition with a unique identifier.
2. User Intention (High Task Case Level)
   - Format: Userlntention: {Action} [optional: {Object}] [optional: {Context}]
   - Description:
      - Describes what the user intends to do
      - The action is mandatory, while the object and context are optional, providing more specificity
3. System Response (Sub-Task and Execution Levels)
   - Format:
      SystemResponse: {Action: [ResponseAction], Target: [ResponseTarget],
      Condition: [optional: {PreCondition}], Result: [ResultDescription] }
   - Description:
      - Details how the system should respond.
      - Includes the action the system should take, the target of the action, any preconditions, and the expected result or outcome
4. Constraints and Expectations
   • Format: Constraints: {ConstraintType: [Details]}
   • Description: Outlines any specific constraints or expectations for the task case, such as performance requirements or user experience considerations.

General notes:
1. Domain
   Syntax: Domain: [Domain Name]
   Description: Clearly states the area or sector the product belongs to.
   Example: Domain: Healthcare Management Systems
2. Style
   Syntax: Style: [Styleguide Name/Description]
   Description: References the visual and interaction design guidelines to be followed.
   Example: Style: Minimalistic with Emphasis on Accessibility
3. Scope
   Syntax: Scope: [Scope Description]
   Description: Defines the boundaries and extent of the product's capabilities.
   Example: Scope: Patient Record Management and Appointment Scheduling
4. Vision
   Syntax: Vision: [Visionary Statement]
   Description: Provides a forward-looking statement about the creative and innovative aspects of the product.
   Example: Vision: To revolutionize patient care through intuitive and seamless digital experiences
5. Goal
   Syntax: Goal: [Customer Value Proposition]
   Description: Articulates the core value the product aims to deliver to the customer.
   Example: Goal: Enhance patient engagement and streamline clinical workflows
6. Phase
   Syntax: Phase: [Phase Name]
   Description: Identifies the current or intended phase of the product lifecycle.
   Example: Phase: Prototype Development
      - Task (HTL)
   Syntax: Task: [High Task Case Level Description]
   Description: Describes a high-level user task or functionality.
   Example: Task: Schedule Patient Appointments
      - Action (STL)
   Syntax: Action: [Sub-Task Level Description]
   Description: Details a specific action within a high-level task.
   Example: Action: Validate Patient Insurance Details
      - Execution (STDL)
   Syntax: Execution: [Sub-Task Detail Level Description]
   Description: Specifies the execution details of a sub-task.
   Example: Execution: Check Insurance Validity through API Call
7. Constraints / Expectations / Results
   Syntax: Constraints: [Constraint Description]
   Description: Specifies any limitations or expectations regarding the product.
   Example: Constraints: Must comply with HIPAA regulations
8. Pragmatic Qualities
   Syntax: Pragmatic Qualities: [Description of Practical Qualities]
   Description: Addresses the practical aspects of the product that contribute to its usefulness.
   Example: Pragmatic Qualities: User-friendly interface, High system reliability
9. Hedonic Qualities
   Syntax: Hedonic Qualities: [Description of Emotional/Experiential Qualities]
   Description: Focuses on the emotional and experiential aspects of the product.
   Example: Hedonic Qualities: Visually pleasing design, Engaging user interactions

## Claims

1. Method of generating an application (10) for a technical domain, including the steps of
- providing general condition information (9, 11, 12) for the application,
- providing user specification information (7) related to the application (10) by a user interface,
- generating a data stream (13) in a description language from the general condition information (9, 11, 12) and the user specification (7) information,
- adding additional information in the description language to the data stream (13) by a first artificial intelligence unit (T1 to T9; 16 to 19; 21), thereby obtaining a supplemented data stream,
- generating the application by a second artificial intelligence unit on the basis of the supplemented data stream.

2. Method according to claim 1, wherein the additional information relates to a goal of the application, a design of the application, a user type of the application and/or a task of the application.

3. Method according to claim 1 or 2, wherein the application (10) is designed to fulfill a task in the technical domain.

4. Method according to one of the preceding claims, wherein the generated application is fed back (14) to be used as part of the general condition information (9, 11, 12) or part of the user specification information (7) for generating a further version of the application (10).

5. Method according to claim 4, wherein one or more parts of the generated application (10) are kept, modified or deleted (20) by a user as the user specification information (7) for generating the further version of the application (10).

6. Method according to claim 4 or 5, wherein a code for generating the application (10) has the same syntax as the user specification information (7).

7. Method according to one of the preceding claims, wherein the first artificial intelligence unit (T1 to T9; 16 to 19; 21) includes a plurality of independent tools (T1 to T9), each generating a part of the additional information.

8. Method according to one of the preceding claims, wherein the first artificial intelligence unit (T1 to T9; 16 to 19; 21) includes a first artificial intelligence subunit (16) for providing expert knowledge and/or a second artificial intelligence subunit (17) for the providing of the user specification information (7).

9. Method according to one of the preceding claims, wherein the first artificial intelligence unit (T1 to T9; 16 to 19; 21) includes a third artificial intelligence subunit (18) for generating code as the additional information in the description language and for the adding of the generated code into the data stream (13), or for generating instrumentalization data as the additional information in the description language and for the adding of the instrumentalization data into the data stream (13).

10. Method according to one of the preceding claims, wherein the first artificial intelligence unit (T1 to T9; 16 to 19; 21) includes a fourth artificial intelligence subunit (19) for generating evaluation data for an evaluation function and/or improvement data for an improvement function as the additional information in the description language and for the adding of the evaluation or improvement data, respectively, into the data stream.

11. Method according to two or more of the claims 8 to 10, wherein the respective artificial intelligence subunits (16 to 19) are controlled by one single artificial intelligence unit (21).

12. Method according to one of the preceding claims, wherein the first and second artificial intelligence unit each comprise a large language model.

13. Method of generating a task structure for a user by using an application generated by a method according to one of the preceding claims.

14. Method of performing a process by executing individual process steps as defined in an application generated by a method according to one of the claims 1 to 12.

15. Device for generating an application (10) for a technical domain, including
- storing means for providing general condition information (9, 11, 12) for the application (10),
- a user interface for providing user specification information (7) related to the application (10) by,
- calculating means designed for
* generating a data stream (13) in a description language from the general condition information (9, 11, 12) and the user specification information (7),
* adding additional information in the description language to the data stream (13) by a first artificial intelligence unit (T1 to T9; 16 to 19; 21), thereby obtaining a supplemented data stream, and
- generating the application (10) by a second artificial intelligence unit on the basis of the supplemented data stream.
